# EUROPÄISCHE PATENTSCHRIFT

(11) **EP 0 941 470 B1**
(45) Veröffentlichungstag und Bekanntmachung des Hinweises auf die Patenterteilung: **24.10.2001**
(21) Anmeldenummer: 97949965.4
(22) Anmeldetag: 26.11.1997
(51) Int. Cl.: G01N 21/64

(54) **FLUORESZENZKORRELATIONSSPEKTROSKOPIEMODUL FÜR EIN MIKROSKOP**
FLUORESCENCE CORRELATION SPECTROSCOPY MODULE FOR A MICROSCOPE
MODULE DE SPECTROSCOPIE A CORRELATION DE FLUORESCENCE POUR UN MICROSCOPE

(30) Priorität: 29.11.1996 DE 19649605
(43) Veröffentlichungstag der Anmeldung: 15.09.1999
(73) Patentinhaber: Deutsches Krebsforschungszentrum Stiftung des öffentlichen Rechts, 69120 Heidelberg (DE)
(72) Erfinder: TEWES, Michael, D-69115 Heidelberg (DE); LANGOWSKI, Jörg, D-69120 Heidelberg (DE)
(74) Vertreter: Castell, Klaus, Dr.
(86) Internationale Anmeldenummer: DE9702776
(87) Internationale Veröffentlichungsnummer: WO9823944

(56) Entgegenhaltungen:
- EP-A- 0 731 371
- WO-A-94/16313
- US-A- 5 296 700
- VOLCKER M ET AL: "MIKROSKOPGESTUTZTE FLUORESZENZ-PHOTONEN-KORRELATION" TECHNISCHES MESSEN TM, Bd. 63, Nr. 4, 1.April 1996, Seiten 128-135, XP000584186
- SCHNEIDER J ET AL: "IMPROVED FLUORESCENCE CORRELATION APPARATUS FOR PRECISE MEASUREMENTS OF CORRELATION FUNCTIONS" REVIEW OF SCIENTIFIC INSTRUMENTS, Bd. 59, Nr. 4, April 1988, Seiten 588-590, XP002059916
- SCHWILLE P ET AL: "DUAL-COLOR FLUORESCENCE CROSS-CORRELATION SPECTROSCOPY FOR MULTICOMPONENT DIFFUSIONAL ANALYSIS IN SOLUTION" BIOPHYSICAL JOURNAL, Bd. 72, Nr. 4, April 1997, Seiten 1878-1886, XP002059917
- THOMPSON N L: "FLUORESCENCE CORRELATION SPECTROSCOPY" TOPICS IN FLUORESCENCE SPECTROSCOPY, Bd. 1, 1991, Seiten 337-378, XP000195640

## Beschreibung

Die vorliegende Erfindung betrifft ein Fluoreszenzkorrelationsspektroskopiemodul für ein Mikroskop gemäß dem Oberbegriff des Anspruches 1. Die Erfindung betrifft auch ein mit einem solchen Modul ausgerüstetes Mikroskop gemäß dem Anspruch 18 und deren Verwendung.

Die Fluoreszenzkorrelationsspektroskopie (FCS) ist eine Technologie zum Studium und zur Untersuchung molekularer dynamischer Vorgänge. Hierzu werden sich in Lösungen befindende Partikel mit zur Fluoreszenz fähigen Farbstoffen dotiert und diese Farbstoffe dann über Licht bestimmter Wellenlänge angeregt, Lichtquanten zu emittieren, die über Detektoren erfaßt und ausgewertet werden können. Über eine konfokale Pinholeanordnung wird dabei dafür gesorgt, daß jeweils nur aus der Brennpunktsebene eines Mikroskopes stammende Lichtquanten zu den Detektoren gelangen und somit zur Auswertung zur Verfügung stehen.

Bekannte Vorrichtungen zur Fluoreszenzkorrelationsspektroskopie bestehen aus einem Mikroskop mit einer im Mikroskop integrierten optischen Anordnung. Das Anregungslicht wird von einem Laser zur Verfügung gestellt. Das Laserlicht wird über eine Ablenkungsoptik auf das Objektiv und die zu untersuchende Probe gelenkt. Aufgrund des konstruktiven Aufbaus einer solchen bekannten Vorrichtung derart, daß die Pinholeanordnung räumlich weit von dem Ort der Einkoppelung des Anregungslichtes in das Mikroskop entfernt ist, weist diese bekannte Vorrichtung den erheblichen Nachteil auf, daß oftmals nachjustiert werden muß, um die konfokale Ausrichtung des Strahlenganges beizubehalten, was beispielsweise bei Messreihen von großem Nachteil ist.

Dieser Nachteil liegt unter anderem darin begründet, daß es bei diesem bekannten Gerät naturgemäß zu thermisch bedingten Ausdehnungen kommt, was insbesondere bei den angesprochenen Messreihen zu erheblichen Problemen führt, insbesondere hinsichtlich der Reproduzierbarkeit der Ergebnisse. Eine Ursache dieses Problemes liegt in dem großen räumlichen Abstand zwischen der Einkoppelung und der Pinholeanordnung, so daß die thermische Ausdehnung zu einer Dejustage der Optik führt. Ein weiterer Nachteil dieser bekannten Vorrichtung liegt darin, daß sie nur integral verfügbar ist, d.h. mit im Mikroskop integrierter Optik. Aufgrund dieser Integration ist das bekannte Gerät aber mit hohen Kosten bei der Herstellung verbunden. Diese Konstruktionsform verbunden mit dem großen Abstand zwischen Einkoppelung und Pinhole sorgt auch dafür, daß Schwingungen beispielsweise am Probentisch zu einer Dejustage des Strahlenganges führen, da die komplette Einheit aus Mikroskop plus Optik zu Schwingungen angeregt wird, die über den Gehäusekörper des Mikroskopes auf die Optik verstärkend übertragen werden. Dies führt wiederum dazu, daß die Ergebnisse von Messreihen schlecht reproduziert werden können.

Bei der Technik der Fluoreszenzkorrelationsspektroskopie wird vom optischen System eines Mikroskopes Gebrauch gemacht. Ein solches Mikroskop, beispielsweise ein Forschungsmikroskop, ist bei vielen Benutzern, für die die Anwendung der vorstehend genannten Technik in Frage kommt, bereits vorhanden.

Der vorliegenden Erfindung liegt ausgehend hiervon daher die Aufgabe zugrunde, ein solches bereits vorhandenes Mikroskop durch die Schaffung eines FCS-Modules zur Fluoreszenzkorrelationsspektroskopie tauglich zu machen und dabei gleichzeitig für eine gute Reproduzierbarkeit der Ergebnisse von Messungen zu sorgen. Auch soll ein Mikroskop mit einem Fluoreszenzkorrelationsspektroskopiemodul geschaffen werden.

Die Erfindung weist zur Lösung dieser Aufgabe hinsichtlich des Modules die im Anspruch 1 angegebenen Merkmale auf. Vorteilhafte Ausgestaltung hiervon sind in den weiteren Ansprüchen beschrieben. Das zu schaffende Mikroskop weist die Merkmale nach Anspruch 18 auf. Verwendungen hiervon sind in den Ansprüchen 19 bis 21 angegeben.

Die Erfindung geht von dem wesentlichen Gedanken aus, daß bei vielen Benutzern, für die die Fluoreszenzkorrelationsspektroskopie in Frage kommt, ein vorzugsweise inverses Mikroskop für die Zwecke der Forschung oder dergleichen ohnehin schon vorhanden ist. Diese bekannten Mikroskope sind jedoch nicht für die Fluoreszenzkorrelationsspektroskopieverwendbar. Gleichzeitig besitzen diese Benutzer oftmals einen für andere Messungen eingesetzten Laser, der Licht von bekannten Wellenlängen aussendet.

Die Erfindung schafft nun ein Modul, mit dem es möglich wird, vorhandene Mikroskope zur Fluoreszenzkorrelationsspektroskopie einzusetzen und darüber hinaus die so geschaffene Anordnung für Messreihen mit hoher Reproduzierbarkeit der gewonnenen Ergebnisse tauglich zu machen.
Erfindungsgemäß ist daher ein Fluoreszenzkorrelationsspektroskopiemodul zur Anordnung an einem optischen Anschluß eines Mikroskopes mit einem Anschluß zur Einkoppelung des Anregungslichtes und einer Pinholeanordnung vorgesehen, bei dem der Einkoppelungsanschluß und die Pinholeanordnung an einem gemeinsamen Trägerkörper angeordnet sind.

Am Einkoppelungsanschluß kann das Anregungslicht über einen Lichtwellenleiter, vorzugsweise eine einmodale Lichtleitfaser in das Modul eingekoppelt werden, wobei das Anregungslicht einem Lasersender entstammt, der Anregungslicht von einer oder mehreren Wellenlängen abgibt. Der Einkoppelungsanschluß und die Pinholeanordnung sind dabei räumlich dicht am gemeinsamen Trägerkörper, der steif ausgebildet ist, angeordnet, so daß eine thermische Ausdehnung des Trägerkörpers nicht dazu führen kann, daß ein justierter Strahlengang dejustiert wird.

Das Modul weist nur wenige optische Elemente auf, so daß aufgrund einer Vielzahl solcher optischer Elemente üblicherweise auftretende optische Verluste vermieden oder reduziert werden können, wodurch auch durch solche optische Elemente verursachte Fehler im Strahlengang gering gehalten werden können.

Das Modul kann an einem optischen Anschluß eines Mikroskopes angeflanscht werden, wobei sich hierzu ein optischer Eingang und/oder Ausgang des Mikroskopes eignet. Zur Forschung eingesetzte Mikroskope besitzen üblicherweise solche Anschlüsse, die zum Anschluß von elektronischen Kameras, beispielsweise CCD Kameras vorgesehen sind. An einem solchen Anschluß kann auf das Zwischenbild des Mikroskopes zugegriffen werden, so daß auch die Möglichkeit besteht, von außen Licht über diesen Anschluß in das Mikroskop einzukoppeln, welches über das Objektiv auf das Probevolumen geleitet werden kann. In diesem Probevolumen befinden sich die mit zur Fluoreszenz geeigneten Farbstoffen dotierten Partikel, die über das eingekoppelte Anregungslicht zur Fluoreszenz angeregt werden. Die so emittierten Lichtquanten werden über die Optik des Mikroskopes dem optischen Anschluß wieder zugeführt, und gelangen hierüber in den Trägerkörper und die Pinholeanordnung.

Erfindungsgemäß ist im Strahlengang nach dem Einkoppelungsanschluß des Trägerkörpers ein Kollimator zur Erzeugung eines parallelen Lichtstrahles am Trägerkörper angeordnet.

Im Strahlengang nach dem Kollimator ist am Trägerkörper eine einstellbare Linsenanordnung zur zum Pinhole konfokalen Fokussierung des Strahlenganges vorgesehen. Durch diese Linsenanordnung wird die Lichtquelle (Ende der Lichtleitfaser) mit der Pinholeanordnung in der Bildebene des Mikroskopes zur Dekkung gebracht. Über eine Einstellvorrichtung, wie beispielsweise Mikrometerschrauben oder einen Schrittmotor kann die Linsenanordnung in allen Raumrichtungen eingestellt werden.

Im Strahlengang vor der Einkoppelung des Anregungslichtes in das Mikroskop kann eine Filteranordnung und ein dichroitischer Strahlenteiler vorgesehen sein. Der vorzugsweise schmalbandige Filter sorgt dafür, daß Anregungslicht nur von selektierten Wellenlängen zum Probevolumen am Objektträger des Mikroskopes gelangt, und zwar über den dichroitischen Strahlenteiler.

Gemäß der Erfindung ist es dabei vorgesehen, daß die Filteranordnung und der Strahlenteiler auf einem gemeinsamen Aufnahmehalter angeordnet sind, der in den Trägerkörper entnehmbar einsetzbar ist. Unter dem Aufnahmehalter ist dabei ein Halter zu verstehen, an dem Filter und Strahlenteiler mit den für den einzelnen Anwendungsfall gewünschten spezifischen optischen Eigenschaften vorher montiert werden können, so daß der Aufnahmehalter zusammen mit den genannten optischen Bauteilen dann als Einheit in den Trägerkörper eingesetzt werden kann. Hierdurch wird nicht nur eine leicht zu bedienende Anordnung geschaffen, da entsprechende Halter mit vorher montierten optischen Elementen mit jeweils spezifischen Eigenschaften, wie beispielsweise Frequenzselektion, zu verschiedenen Zwecken bereit gehalten werden können, sondern auch dem Erfordernis der räumlich dichten Anordnung Rechnung getragen.

In Weiterbildung der Erfindung ist im Emissionsstrahlengang hinter dem Pinhole mindestens eine Optikeinheit mit einem dichroitischen Strahlenteiler oder einem Spiegel vorgesehen. Diese Optikeinheit sorgt im Falle des dichroitischen Strahlenteilers dafür, daß bei einer entsprechenden frequenzselektiven Eigenschaft des Strahlenteilers ein Spektrum der Emissionsstrahlung in Richtung auf einen Detektor aus der Emissionsstrahlung ausgekoppelt werden kann, eine andere Farbe aus der Emissionsstrahlung durch den Strahlenteiler aber weitgehend unbeeinflußt hindurch treten kann, um auf einen Spiegel einer im Strahlengang der Emissionsstrahlung hinter der genannten ersten Optikeinheit angeordneten zweiten Optikeinheit zu treffen, von wo aus diese Farbe auf einen der zweiten Optikeinheit zugeordneten zweiten Detektor zur Erkennung von emittierten Lichtquanten der zweiten Wellenlänge trifft. Diese Anordnung ist insbesondere zur Kreuzkorrelation mit zwei Farbkanälen von großem Vorteil, mit der Wechselbeziehungen verschieden farbig dotierter Partikel in der Lösung untersucht werden können.

Die mindestens eine Optikeinheit ist in vorteilhafter Weise an einem Aufnahmehalter angeordnet, der in den Trägerkörper entnehmbar einsetzbar ist. In vorteilhafter Weise sind an dem Aufnahmehalter einander gegenüberliegend paarweise Kombinationen aus Filter und Strahlenteiler vorgesehen, so daß über ein Herausnehmen des Aufnahmehalters aus dem Trägerkörper und ein um 180° gedrehtes Wiedereinsetzen des Aufnahmehalters in den Trägerkörper schnell eine Frequenzselektion hinsichtlich der Emissionsstrahlung möglich ist.

Der an der Optikeinheit vorgesehene Filter ist zur Selektion der Detektionswellenlängen vorgesehen, d.h. zur Selektion der für die Untersuchung gewünschten Spektren der Emissionsstrahlung, so daß über mehrere hintereinander im Emissionsstrahlengang angeordnete Optikeinheiten mit Kombinationen aus Filter, Strahlteiler und Spiegel beziehungsweise beliebige Unterkombinationen dieser Bauteile mehrere Emissionsspektren der Fluoreszenzstrahlung untersucht und miteinander in eine korrelative Beziehung gebracht und entsprechend ausgewertet werden können.

So ist es beispielsweise möglich, über drei hintereinander im Emissionsstrahlengang liegende Optikeinheiten mit den genannten optischen Bauteilen drei Farben (unterschiedliche Wellenlängen des Emissionsspektrums) gleichzeitig zur gewünschten Untersuchung zu verwenden, so daß in diesem Fall zwei Optikeinheiten mit Kombinationen aus dichroitischer Strahlteiler und Filter gefolgt von einer Kombination aus Spiegel und Filter hintereinander im Emissionsstrahlengang auf Aufnahmehaltern im Trägerkörper angeordnet zum Einsatz kommen. Hierdurch können die von den jeweiligen Detektoren einzeln gezählten frequenzselektierten Impulse zur kreuzkorrelierten Auswertung verwendet werden.

Im Emissionsstrahlengang vor dem jeweiligen Detektor kann dabei eine Linsenanordnung zur Fokussierung des Emissionlichtes auf den empfindlichen Bereich des Detektors vorgesehen sein.

Das erfindungsgemäße Modul ist dabei derart ausgebildet, daß eine Justierung der wenigen optischen Bauteile jederzeit sichergestellt ist. Zu diesem Zweck ist der Trägerkörper zur Aufnahme der Aufnahmehalter mit den optischen Bauteilen mit Formflächen versehen, an denen die mit komplementären Formflächen versehenen Aufnahmehalter am Trägerkörper im Strahlengang ausgerichtet festgelegt werden können. Diese Formflächen haben eine zentrierende Funktion, so daß die einmal am Aufnahmehalter zum Strahlengang der Emissionsstrahlung ausgerichtet angeordneten optischen Elemente auch beim Herausnehmen der Aufnahmehalter aus den Vertiefungen des Trägerkörpers und dem erneuten Einsetzen der Aufnahmehalter in den Trägerkörper ausgerichtet bleiben. Dies ist beispielsweise dann von Vorteil, wenn eine Kombination aus Filter und dichroitischem Strahlenteiler durch eine andere entsprechende Kombination ausgewechselt werden soll, die am gleichen Aufnahmehalter, lediglich der anderen Kombination gegenüberliegend angeordnet ist. Hierzu ist es nur erforderlich, den Aufnahmehalter vom Trägerkörper abzunehmen, ihn um 180° zu drehen und dann wieder in die Vertiefung des Trägerkörpers einzusetzen, wobei die am Trägerkörper und am Aufnahmehalter vorgesehenen Formflächen, beispielsweise Konusflächen dann dafür sorgen, daß die neue Kombination aus Filter und dichroitischem Spiegel im Strahlengang ausgerichtet angeordnet ist, so daß ohne neue Justierung sofort wieder mit einer Messung fortgefahren werden kann.

Der Trägerkörper kann aus einem metallischen Werkstoff einstückig ausgebildet sein und einen Anschlußflansch zur Anordnung des Trägerkörpers am Anschluß des Mikroskopes aufweisen. Hierzu ist es beispielsweise möglich, den Trägerkörper aus Aluminium mittels einer CNC gesteuerten Werkzeugmaschine zu fertigen.

Das Laserlicht kann in das Modul über eine Monomodelichtleitfaser eingekoppelt werden. Hinter dem Flansch zum Anschluß der Lichtleitfaser befindet sich der Kollimator zur parallelen Ausrichtung des Lichtstrahles. Der Durchmesser dieses Strahles bestimmt den Anteil der Apertur, die zur Ausleuchtung der Probe verwendet wird. Der Kollimator muß daher auf die numerische Apertur der Lichtleitfaser abgestimmt sein.

Mittels eines mit dem erfindungsgemäßen Modul ausgestatteten Mikroskopes ist es möglich, Diffusionskoeffizienten zu bestimmen. Aufgrund der Möglichkeit der gleichzeitigen Gewinnung von Fluoreszenzsignalen unterschiedlicher Spektralbereiche über zwei oder mehrere hintereinander angeordnete Optikeinheiten mit entsprechenden optischen Bauteilen ist es möglich, diese Signale zur Kreuzkorrelation heranzuziehen und somit Wechselwirkungen verschiedener im Probevolumen befindlicher Moleküle zu untersuchen. Auch ist es möglich, hierdurch Rotationsdiffusionskoeffizienten zu bestimmen, indem die Emissionsstrahlung mit zwei Optikeinheiten zu gleichen Teilen auf zwei Detektoren aufgeteilt wird und wieder die Kreuzkorrelationsfunktion gebildet wird, so daß sehr kleine Diffusionszeiten gemessen werden können. Hierzu erforderliche Polarisatoren können in die Aufnahmehalter integriert werden.

Mit dem erfindungsgemäßen Fluoreszenzkorrelationsspektroskopiemodul ist es möglich, vorhandene Mikroskope so nachzurüsten, daß damit unter Zuhilfenahme eines Lasers und einer üblichen Laborausstattung in der Form eines Auswerterechners mit einer Korrelatorkarte Fluoreszenzkorrelationsspektroskopie betrieben werden kann. Zudem ist es möglich, Kreuzkorrelationsbestimmungen durchzuführen. Neben dem Merkmal der kostengünstigen Nachrüstung vorhandener Mikroskope wird durch die räumlich kompakte Einheit des Modules eine gute Reproduzierbarkeit der gewonnenen Ergebnisse durch den Wegfall der Notwendigkeit der Nachjustierung der optischen Elemente erreicht. Aufgrund der nur geringen Zahl optischer Bauteile werden optische Verluste und Abbildungsfehler minimiert. Das Modul kann an ein vorhandenes Mikroskop angeflanscht werden und besitzt neben dem Mikroskop alle zur Fluoreszenzkorrelationsspektroskopie benötigten optischen Bauteile in dicht gepackter Form. Hierdurch entfällt die Notwendigkeit der ständigen Nachjustierung dieser Bauteile. Der Trägerkörper zur Aufnahme der optischen Bauteile kann mittels numerisch gesteuerter Werkzeugmaschinen kostengünstig hergestellt werden. Die optischen Bauteile werden von Aufnahmehaltern aufgenommen, die vormontiert werden können und nur mehr in den Trägerkörper eingesetzt werden müssen. Aufgrund der an den Aufnahmehaltern und dem Trägerkörper vorgesehenen zentrierenden Formflächen entfällt die Notwendigkeit der Nachjustierung der ausgerichteten optischen Bauteile. Die gesamte konfokale Einheit ist in dem als Block ausgebildeten Trägerkörper integriert. Der am Mikroskop vorhandene optische Anschluß kann für die konfokale Abbildung der Lasereinkopplung und Detektionspinhole eingesetzt werden. Die Aufnahmehalter für die optischen Bauteile werden in konischen Aufnahmen des Trägerkörpers angeordnet, so daß ein Filterwechsel ohne Neujustage erfolgen kann. Die räumlich kompakte Anordnung der optischen Bauteile auf dem steifen Trägerkörper sorgt für Unempfindlichkeit gegen mechanische Schwingungen des Probentisches.

Die Erfindung wird im folgenden anhand der Zeichnung näher erläutert. Diese zeigt in:
Fig. 1 eine schematische perspektivische Ansicht des an einem ausschnittsweise dargestellten Mikroskop angeordneten Fluoreszenzkorrelationsspektroskopiemodules;
Fig. 2 eine Draufsichtansicht von oben auf das Modul nach Fig. 1;
Fig. 3 eine Schnittansicht gemäß I-I nach Fig. 2;
Fig. 4 eine Draufsichtansicht von unten auf einen Aufnahmehalter mit zwei Sätzen von Filtereinrichtung und Strahlenteiler; und
Fig. 5 eine Schnittansicht des Aufnahmehalters nach Fig. 4.

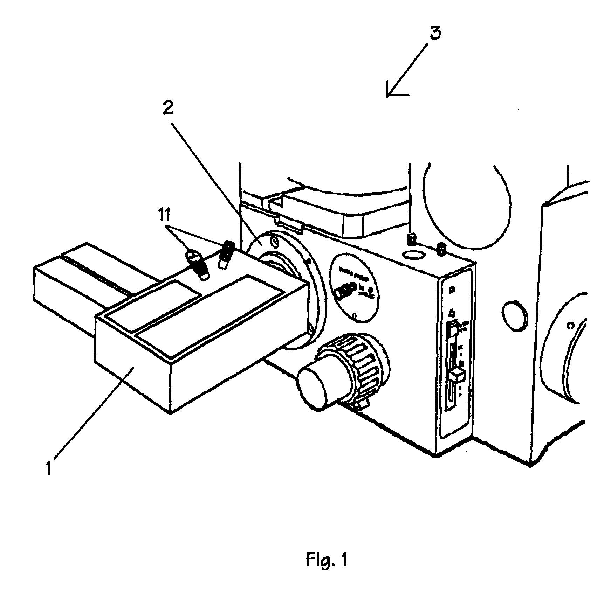

Wie leicht aus Fig. 1 der Zeichnung ersichtlich, ist das Fluoreszenzkorrelationsspektroskopiemodul 1 in der dargestellten Ausführungsform an einem optischen Ausgang 2 eines ausschnittsweise dargestellten Mikroskopes 3 angeflanscht.

Ein solches Mikroskop 3 besitzt regelmäßig einen solchen optischen Ausgang, an dem beispielsweise eine CCD Kamera oder eine Videokamera angeflanscht werden kann, um das auf dem Objektträger angeordnete Probevolumen zu dokumentieren. Dieser Ausgang befindet sich vor der Bildebene des Zwischenbildes des Mikroskopes, also im Bereich der Abbildungsoptik des Mikroskopes, der über das Okular beobachtet werden kann.

Über diesen Ausgang kann demnach Licht ausgekoppelt und infolgedessen auch in das Mikroskop eingekoppelt werden. Über eine entsprechend dem Ausgang 2 des Mikroskopes ausgebildete und am Modul 1 angeordnete Flanschverbindung kann das Modul 1 am Ausgang 2 befestigt werden.

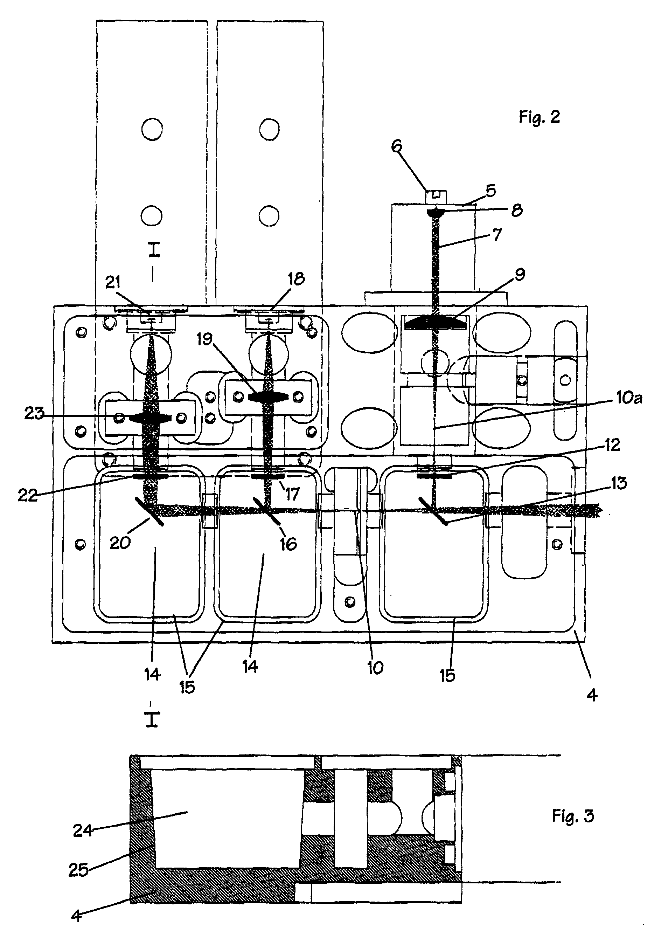

Fig. 2 der Zeichnung zeigt das Modul 1 in einer Draufsichtansicht von oben, wobei der Erläuterung halber der Anregungs- beziehungsweise Emissionsstrahlengang ebenfalls dargestellt ist.

Das in Fig. 1 dargestellte Modul 1 wird über eine im Bereich der rechten Seitenfläche des Trägerkörpers 4 vorgesehene nicht näher dargestellte Flanschverbindung an dem optischen Ausgang 2 des Mikroskopes 3 befestigt.

An einem mit dem Bezugszeichen 5 bezeichneten Anschluß befindet sich eine Flanschverbindung 6, an der ein nicht näher dargestellter Lichtwellenleiter befestigt werden kann, über den das von einem Laser stammende Anregungslicht in das Modul 1 eingekoppelt werden kann. Es kann hierzu Anregungslicht einer oder mehrerer Wellenlängen verwendet werden, wobei letzteres beispielsweise dann von Vorteil ist, wenn sich im Probevolumen Moleküle mit verschiedenen Fluoreszenzfarbstoffen befinden.

Das Bezugszeichen 7 zeigt auf den Strahlengang des eingekoppelten Laserlichtes. Im Strahlengang 7 befindet sich ein Kollimator 8, um einen parallel gerichteten Strahlengang zu erzeugen. Der Durchmesser dieses Strahles bestimmt den Anteil der Apertur, der zur Beleuchtung der Probe im Probevolumen verwendet wird. Der Kollimator 8 ist daher auf die numerische Apertur der Faser des Lichtwellenleiters abgestimmt.

Dem Kollimator 8 folgt eine Linsenanordnung 9 zur zum Pinhole 10 konfokalen Ausrichtung des Strahlenganges (Fokus 10a des Anregungslichtes). Wie aus Fig. 1 ersichtlich ist, ist die Linsenanordnung 9 über schematisch dargestellte Einstellschrauben 11, beispielsweise Mikrometerschrauben einstellbar und kann zusätzlich auch in der Richtung senkrecht zum Strahlengang verstellt werden, so daß eine Einstellbarkeit in allen drei Raumrichtungen gewährleistet ist.

Der so fokussierte Strahlengang trifft in der Folge auf einen frequenzselektiven Filter 12 zur Unterdrückung unerwünschter Wellenlängen im Spektrum des Anregungslichtes. Das Bezugszeichen 13 bezeichnet einen dichroitischen Strahlenteiler, mit dem das Anregungslicht in Richtung des optischen Ausganges 2 des Mikroskopes 3 abgelenkt wird. Im Mikroskop 3 wird das Anregungslicht über eine Abbildungsoptik auf das Probevolumen gelenkt und regt die mit Fluoreszenzfarbstoff dotierten Moleküle zur Fluoreszenz an.

Über die Abbildungsoptik des Mikroskopes wird die von dem Fluoreszenzeffekt bewirkte Emissionsstrahlung über den optischen Ausgang 2 des Mikroskopes 3 ausgekoppelt und in das Modul 1 eingekoppelt, wo sie über den dichroitischen Strahlenteiler 13 und das Pinhole 10 in eine im Strahlengang hinter dem Pinhole 10 angeordnete Optikeinheit 14 eintritt.

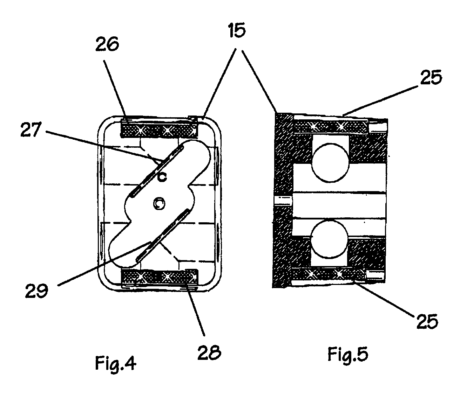

Der Trägerkörper 4 nimmt näher in Fig. 4 und 5 dargestellte Aufnahmehalter 15 auf, an denen die optischen Bauteile des Modules 1 angeordnet sind. Wie leicht aus Fig. 2 der Zeichnung ersichtlich ist, besitzt das Modul 1 in der dargestellten Ausführungsform drei Aufnahmehalter 15.

Einer der drei Aufnahmehalter 15 trägt den bereits beschriebenen Filter 12 und den Strahlenteiler 13, befindet sich also im Strahlengang sowohl des Anregungslichtes als auch der Emissionsstrahlung, während die beiden weiteren Aufnahmehalter 15 im Strahlengang der Emissionsstrahlung hinter dem Pinhole 10 angeordnet sind.

Die Optikeinheit 14 am Aufnahmehalter 15 besteht in der dargestellten Ausführungsform aus einem dichroitischen Strahlenteiler 16 zur Auskoppelung einer ersten Nachweiswellenlänge der Emissionsstrahlung und einem Filter 17 für die Detektionswellenlänge des ersten Kanales. Hierunter ist die von einem Detektor 18 zu erfassende erste Wellenlänge aus dem Emissionsspektrum zu verstehen. Vor dem Detektor 18 befindet sich in der dargestellten Ausführungsform eine Linsenanordnung 19 zur Bündelung des Lichtes der ersten Wellenlänge auf den empfindlichen Teil des Detektors 18. Ein Teil der Emissionsstrahlung passiert den dichroitischen Strahlenteiler 16 und trifft in der Folge auf einen Spiegel 20, der das Licht in Richtung auf einen zweiten Detektor 21 ablenkt, nachdem es durch einen Filter 22 und eine Linsenanordnung 23 hindurch getreten ist.

Wie es ohne weiteres ersichtlich ist, sind an dem Trägerkörper 4 in der dargestellten Ausführungsform zwei Detektoren 18, 21 angeordnet und dementsprechend zwei Optikeinheiten 14. Es ist aber möglich, die Zahl der im Strahlengang der Emissionsstrahlung liegenden Optikeinheiten 14 zu erhöhen, beispielsweise auf drei oder mehr Optikeinheiten, um verschiedene Farben der Emissionsstrahlung auswerten zu können.

Fig. 3 der Zeichnung zeigt einen Schnitt I-I nach Fig. 2, wobei in Fig. 3 der Vereinfachung halber die in der Schnittebene liegenden optischen Bauteile weggelassen worden sind. Wie es aber aus Fig. 3 deutlich hervorgeht, besitzt der Trägerkörper 4 zur Aufnahme der Aufnahmehalter 15 Vertiefungen 24 mit geneigten Seitenflächen 25, die zu Seitenflächen 26 (Fig. 5) der Aufnahmehalter 15 komplementär ausgebildet sind, so daß die die optischen Bauteile tragenden Aufnahmehalter 15 in die Vertiefungen 24 eingesetzt werden können und hierdurch eine definierte zentrierende Lage im Trägerkörper 4 einnehmen. Dies ist von erheblichen Vorteil, da nunmehr die verschiedene optische Bauteile, beispielsweise dichroitische Strahlenteiler und Filter für verschiedene Wellenlängen des Anregungs- und/oder Emissionsspektrums tragenden Aufnahmehalter 15 einfach ausgetauscht werden können, wobei ein in den Trägerkörper 4 eingesetzter Aufnahmehalter 15 automatisch zum Strahlengang ausgerichtet wird und zwar aufgrund der komplementären zentrierenden konischen Flächen der Vertiefungen 24 und der Aufnahmehalter 15.

Fig. 4 und 5 zeigen Optikeinheiten 14 beziehungsweise Aufnahmehalter 15 mit konischen Seitenflächen 26 und optischen Bauteilen. Am Aufnahmehalter 15 sind in der dargestellten Ausführungsform vier optische Bauteile angeordnet.

Jeweils zwei der optischen Bauteile sind einander zugeordnet, nämlich der Filter 26 und der Strahlenteiler 27 beziehungsweise der Filter 28 und der Strahlenteiler 29. Anstelle der Strahlenteiler können aber auch Spiegel vorgesehen sein, so daß ein Aufnahmehalter 15 beispielsweise auch einen Strahlenteiler und einen Spiegel mit jeweils zugeordneten Filtern aufweisen kann.

Durch einfaches Herausnehmen eines Aufnahmehalters 15 aus der Vertiefung 24 des Trägerkörpers 4 und einer Drehung des heraus genommenen Aufnahmehalters 15 um 180° und das Wiedereinsetzen des gedrehten Aufnahmehalters 15 in die Vertiefung 24 kann somit beispielsweise anstelle einer Kombination Filter/Strahlenteiler eine Kombination Filter/Spiegel oder auch eine einen anderen Frequenzbereich des Emissionsspektrums selektierende Kombination in den Strahlengang der Emissionsstrahlung eingesetzt werden, ohne daß eine neue Justierung erforderlich wäre. Aufgrund der zentrierenden Formflächen sowohl am Aufnahmehalter als auch am Trägerkörper ist das Modul gegen am Probentisch auftretende Schwingungen unempfindlich, so daß eine hohe Reproduzierbarkeit der mit dem Modul gewonnenen Messergebnisse sichergestellt ist.

Das erfindungsgemäße Modul kann einfach an einem inversen Mikroskop angeflanscht werden. Durch die räumlich dicht gepackte Anordnung der Lichtquelle, nämlich des Endes der Lichtleitfaser und des Pinholes beeinträchtigt eine thermische Ausdehnung und eine Belastung des Modules durch Schwingungen eine einmal hergestellte Justierung von Einkoppelung und Pinhole nicht, so daß eine dauernde neue Justierung entfällt.

Das gesamte Modul weist nur eine geringe Zahl von einzelnen Bauteilen auf, und der Trägerkörper kann kostengünstig hergestellt werden. Das Modul ermöglicht die Fluoreszenzkorrelationsspektroskopie auch solchen Benutzern, die über ein entsprechendes Mikroskop und einen Laser verfügen. Die am Modul vorhandenen Linsenanordnungen können über Einstellschrauben, beispielsweise Mikrometerschrauben eingestellt werden. Da dies auch für die Linsenanordnungen gilt, die die Emissionsstrahlung auf die Detektoren bündeln, entfällt die Notwendigkeit der Anordnung der Detektoren auf einem x-y-Positioniertisch, wodurch ein kompakter und stabiler Aufbau der gesamten Anordnung erzielt wird. Die Filter und Strahlenteiler sowohl für die Selektion der Anregungs- als auch Emissionsstrahlung befinden sich an Aufnahmehalter mit konischen zentrierenden Seitenflächen und können jeweils mindestens zwei Kombinationen optischer Bauteile aus Filter/Strahlenteiler beziehungsweise Filter/Spiegel aufnehmen, so daß durch einfaches Herausnehmen und Einsetzen der Aufnahmehalter in den Trägerkörper unterschiedliche Spektralbereiche selektiert werden können. Die Konusflächen am Trägerkörper und an den Aufnahmehalter sorgen für eine sehr gute Positioniergenauigkeit der optischen Bauteile. Ein mit dem erfindungsgemäßen Modul ausgestattetes Mikroskop kann für Messreihen eingesetzt werden, ohne daß eine erneuerte Justierung vor jeder Messreihen notwendig ist. Im Strahlengang der Emissionsstrahlung können mehrere Optikeinheiten hintereinander angeordnet werden, so daß mehrere Kanäle gleichzeitig zur Auswertung zur Verfügung stehen. Zur hoch genauen Bestimmung von Diffusionskoeffizienten können zwei Kanäle eingesetzt werden, so daß Probe und Standard gleichzeitig in einer Lösung gemessen werden können. Hierdurch beeinflussen Fehler das Ergebnis nicht, da sich ein solcher Fehler auf beide Kanäle auswirkt. Die Verwendung zweier oder mehrerer Kanäle durch zwei oder mehrere Optikeinheiten ermöglicht durch die damit zur Verfügung stehenden zwei oder mehreren Farbkanälen die Gewinnung von Informationen über die gemeinsame Bewegung der Fluorophore über eine Kreuzkorrelation. Durch die Aufteilung des Emissionslichtes auf beispielsweise zwei Detektoren über zwei Optikeinheiten und die Kreuzkorrelation der Messwerte ist es möglich, den Einfluß der Totzeiten derartiger Detektoren zu überwinden und auch sehr kleine Diffusionszeiten zu messen.

Hinsichtlich vorstehend im einzelnen nicht näher erläuterter Merkmale wird in übrigen ausdrücklich auf die Ansprüche und die Zeichnung verwiesen.

## Patentansprüche

1. Fluoreszenzkorrelationsspektroskopiemodul zur Anordnung an einem optischen Anschluß (2) eines Mikroskopes (3) mit einem Anschluß (5) zur Einkoppelung des Anregungslichtes und einer Pinholeanordnung (10), wobei der Einkoppelungsanschluß und die Pinholeanordnung an einem gemeinsamen Trägerkörper (4) angeordnet sind.

2. Modul nach Anspruch 1, **dadurch gekennzeichnet, daß** der optische Anschluß (2) des Mikroskopes ein optischer Eingang und/oder Ausgang ist.

3. Modul nach Anspruch 1 oder 2, **dadurch gekennzeichnet, daß** im Strahlengang nach dem Einkoppelungsanschluß (5) ein Kollimator (8) zur Erzeugung eines parallelen Lichtstrahles am Trägerkörper (4) angeordnet ist.

4. Modul nach Anspruch 3, **dadurch gekennzeichnet, daß** im Strahlengang nach dem Kollimator (8) am Trägerkörper (4) eine einstellbare Linsenanordnung (9) zur zum Pinhole konfokalen Fokussierung des Strahlenganges vorgesehen ist.

5. Modul nach einem der Ansprüche 1 bis 4, **dadurch gekennzeichnet, daß** im Strahlengang vor der Einkoppelung des Anregungslichtes in das Mikroskop (3) eine Filteranordnung (12) und ein dichroitischer Strahlenteiler (13) angeordnet ist.

6. Modul nach Anspruch 5, **dadurch gekennzeichnet, daß** die Filteranordnung (12) und der Strahlenteiler (13) auf einem gemeinsamen Aufnahmehalter (15) angeordnet sind, der in den Trägerkörper (4) entnehmbar einsetzbar ist.

7. Modul nach einem der Ansprüche 1 bis 6, **dadurch gekennzeichnet, daß** im Emissionsstrahlengang hinter dem Pinhole (10) mindestens eine Optikeinheit (14) mit einem dichroitischen Strahlenteiler (16) und/oder einem Spiegel (20) vorgesehen ist.

8. Modul nach Anspruch 7, **dadurch gekennzeichnet, daß** die mindestens eine Optikeinheit (14) an einem Aufnahmehalter (15) angeordnet ist, der in den Trägerkörper (4) entnehmbar einsetzbar ist.

9. Modul nach Anspruch 7 oder 8, **dadurch gekennzeichnet, daß** an der Optikeinheit (14) ein Filter (17, 22) zur Selektion der Detektionswellenlängen vorgesehen ist.

10. Modul nach einem der Ansprüche 1 bis 9, **dadurch gekennzeichnet, daß** im Emissionsstrahlengang vor einem Detektor (18, 21) eine Linsenanordnung (19, 23) zur Fokussierung des Emissionlichtes auf den Detektor (18, 21) vorgesehen ist.

11. Modul nach einem der Ansprüche 1 bis 10, **dadurch gekennzeichnet, daß** der Trägerkörper (4) zur Aufnahme der Aufnahmehalter (15) mit Formflächen (25) versehen ist, an denen die mit komplementären Formflächen versehenen Aufnahmehalter (15) am Trägerkörper im Strahlengang ausgerichtet festlegbar sind.

12. Modul nach einem der Ansprüche 1 bis 11, **dadurch gekennzeichnet, daß** der Trägerkörper (4) aus einem metallischen Werkstoff einstückig ausgebildet ist und einen Anschlußflansch zur Anordnung des Trägerkörpers am Anschluß (2) des Mikroskopes (3) aufweist.

13. Modul nach einem der Ansprüche 1 bis 12, **dadurch gekennzeichnet, daß** der Trägerkörper mit Ausnehmungen (24) zur Aufnahme der Aufnahmehalter (15) ausgebildet ist, wobei die Ausnehmungen (24) geneigte Seitenflächen (25) zur ausgerichteten Aufnahme der Aufnahmehalter aufweisen.

14. Modul nach einem der Ansprüche 1 bis 13, **dadurch gekennzeichnet, daß** die Aufnahmehalter mit mindestens zwei frequenzselektiven Filtereinrichtungen (26, 28) versehen sind.

15. Modul nach einem Ansprüche 1 bis 14, **dadurch gekennzeichnet, daß** als Anregungslicht Laserlicht über eine einmodale Lichtleitfaser eingekoppelt wird.

16. Modul nach einem der Ansprüche 3 bis 15, **dadurch gekennzeichnet, daß** der Kollimator (8) auf die numerische Apertur der Lichtleitfaser abgestimmt ist.

17. Modul nach einem der Ansprüche 14 bis 16, **dadurch gekennzeichnet, daß** durch die frequenzselektiven Filtereinrichtungen (26, 28) unterschiedliche Spektralbereiche der Anregungs- und/oder Emissionswellenlängen wählbar sind.

18. Mikroskop mit einem Fluoreszenzkorrelationsspektroskopiemodul nach einem der vorhergehenden Ansprüche.

19. Verwendung des Fluoreszenzkorrelationsspektroskopiemodules nach einem der Ansprüche 1 bis 17 oder 18 zur Bestimmung von Diffusionskoeffizienten.

20. Verwendung nach Anspruch 19 zur Bestimmung von Rotationsdiffusionskoeffizienten.

21. Verwendung des Fluoreszenzkorrelationsspektroskopiemodules nach einem der Ansprüche 1 bis 17 oder 18 mit mindestens zwei Optikeinheiten zur Kreuzkorrelation der Signale der von den mindestens zwei Optikeinheiten frequenzselektierten unterschiedlichen Fluoreszenzemissionsspektren.

## Claims

1. A fluorescence correlation spectroscopy module, to be located on an optical connection (2) of a microscope (3), having a connection (5) for coupling in of the excitation light and a pinhole arrangement (10), with the coupling connection and the pinhole arrangement located on a joint carrier body (4).

2. The module according to claim 1, **characterized in that** the optical connection (2) of the microscope is an optical input and/or output.

3. The module according to claim 1 or 2, **characterized in that** a collimator (8) is located on the carrier body (4) in the beam path after the coupling connection (5) for generation of a parallel light ray.

4. The module according to claim 3, **characterized in that** an adjustable lens arrangement (9) is provided on the carrier body (4), in the beam path after the collimator (8), for confocal focusing of the beam path to the pinhole.

5. The module according to one of the claims 1 to 4, **characterized in that** a filter arrangement (12) and a dichroic beam splitter (13) are located in the beam path before the coupling of the excitation light into the microscope (3).

6. The module according to claim 5, **characterized in that** the filter arrangement (12) and the beam splitter (13) are located on a joint accommodation holder (15), which is removably insertable in the carrier body (4).

7. The module according to one of the claims 1 to 6, **characterized in that** at least one optical unit (14), having a dichroic beam splitter (16) and/or a mirror (20), is provided in the emission beam path behind the pinhole (10).

8. The module according to claim 7, **characterized in that** the at least one optical unit (14) is located on an accommodation holder (15) which is removably insertable in the carrier body (4).

9. The module according to claim 7 or 8, **characterized in that** a filter (17, 22) for selection of the detection wavelengths is provided on the optical unit (14).

10. The module according to one of the claims 1 to 9, **characterized in that**, in the emission beam path in front of a detector (18, 21) , a lens arrangement (19, 23) is provided for focusing the emission light on the detector (18, 21).

11. The module according to one of the claims 1 to 10, **characterized in that** the carrier body (4) is provided with shaped surfaces (25) for accommodating the accommodation holder (15), on which the accommodation holder (15), which is provided with complimentary shaped surfaces, can be affixed, aligned in the beam path, on the carrier body.

12. The module according to one of the claims 1 to 11, **characterized in that** the carrier body (4) is implemented in one piece from a metallic material and has an attachment flange for placement of the carrier body on the connection (2) of the microscope (3).

13. The module according to one of the claims 1 to 12, **characterized in that** the carrier body is implemented with recesses (24) to accommodate the accommodation holder (15), with the recesses (24) having slanted side surfaces (25) for aligned accommodation of the accommodation holder.

14. The module according to one of the claims 1 to 13, **characterized in that** the accommodation holder is provided with at least two frequency-selective filter devices (26, 28).

15. The module according to one of the claims 1 to 14, **characterized in that** laser light is coupled in via a single-mode optical fiber.

16. The module according to one of the claims 3 to 15, **characterized in that** the collimator (8) is matched to the numerical aperture of the optical fiber.

17. The module according to one of the claims 14 to 16, **characterized in that** different spectral ranges of the excitation and/or emission wavelengths are selectable through the frequency-selective filter devices (26, 28).

18. The microscope with a fluorescence correlation spectroscopy module according to one of the preceding claims.

19. The utilization of the fluorescence correlation spectroscopy module according to one of the claims 1 to 17 or 18 for determination of diffusion coefficients.

20. The utilization according to claim 19 for determination of rotation diffusion coefficients.

21. The utilization of the fluorescence correlation spectroscopy module according to one of the claims 1 to 17 or 18 with at least two optical units for cross-correlation of the signals of the different fluorescence emission spectra, which are selected by frequency by the at least two optical units.

## Revendications

1. Module de spectroscopie à corrélation de fluorescence à disposer sur un raccord (2) optique d'un microscope (3) ayant un raccord (5) pour injecter la lumière d'excitation et une disposition de trou d'aiguille (10), dans lequel le raccord d'injection et la disposition de trou d'aiguille sont disposés sur un corps support commun (4).

2. Module selon la revendication 1, **caractérisé en ce que** le raccord optique (2) du microscope est une entrée et/ou sortie optique.

3. Module selon la revendication 1 ou 2, **caractérisé en ce qu'**un collimateur (8) est disposé dans le faisceau après le raccord d'injection (5) en vue de produire un faisceau lumineux parallèle sur le corps support (4).

4. Module selon la revendication 3, **caractérisé en ce qu'**une disposition de lentilles (9) réglable est prévue dans le faisceau après le collimateur (8) sur le corps support (4) afin d'une focalisation confocale du faisceau en direction du trou d'aiguille.

5. Module selon l'une quelconque des revendications 1 à 4, **caractérisé en ce qu'**une disposition de filtre (12) et un séparateur de faisceau dichroïque (13) sont disposés dans le faisceau avant l'injection de la lumière d'excitation dans le microscope (3).

6. Module selon la revendication 5, **caractérisé en ce que** la disposition de filtre (12) et le séparateur de faisceau (13) sont disposés sur un support récepteur (15) commun qui peut être inséré de façon amovible dans le corps support (4).

7. Module selon l'une quelconque des revendications 1 à 6, **caractérisé en ce qu'**au moins une unité optique (14) ayant un séparateur de faisceau dichroïque (16) et/ou un miroir (20) sont prévus dans le faisceau d'émission derrière le trou d'aiguille (10).

8. Module selon la revendication 7, **caractérisé en ce que** ladite au moins une unité optique (14) est disposée sur un support récepteur (15) qui peut être inséré de façon amovible dans le corps support (4).

9. Module selon la revendication 7 ou 8, **caractérisé en ce qu'**un filtre (17, 22) est prévu sur l'unité optique (14) pour sélectionner les longueurs d'onde de détection.

10. Module selon l'une quelconque des revendications 1 à 9, **caractérisé en ce qu'**une disposition de lentilles (19, 23) est prévue dans le faisceau d'émission devant un détecteur (18, 21) afin de focaliser la lumière d'émission sur le détecteur (18, 21).

11. Module selon l'une quelconque des revendications 1 à 10, **caractérisé en ce que** le corps support (4) est muni de surfaces moulées (25) pour recevoir les supports récepteurs (15), sur lesquelles les supports récepteurs (15) munis de surfaces moulées complémentaires peuvent être fixées sur le corps support de façon alignée dans le faisceau.

12. Module selon l'une quelconque des revendications 1 à 11, **caractérisé en ce que** le corps support (4) est formé d'un seul tenant à partir d'un matériau métallique et comprend une collerette de raccordement pour disposer le corps support sur le raccord (2) du microscope (3).

13. Module selon l'une quelconque des revendications 1 à 12 **caractérisé en ce que** le corps support est formé avec des creux (24) pour recevoir le support récepteur (15), les creux (24) comprenant des surfaces latérales inclinées (25) pour recevoir de façon ajustée le support récepteur.

14. Module selon l'une quelconque des revendications 1 à 13, **caractérisé en ce que** les supports récepteurs sont munis d'au moins deux dispositifs de filtre sélectifs en fréquence (26, 28).

15. Module selon l'une quelconque des revendications 1 à 14, **caractérisé en ce que** la lumière laser en tant que lumière d'excitation est injectée par l'intermédiaire d'une fibre optique monomodale.

16. Module selon l'une quelconque des revendications 3 à 15, **caractérisé en ce que** le collimateur (8) est réglé sur l'ouverture numérique de la fibre optique.

17. Module selon l'une quelconque des revendications 14 à 16, **caractérisé en ce que** des bandes spectrales différentes des longueurs d'onde d'excitation et/ou d'émission peuvent être sélectionnées par les dispositifs de filtre sélectifs en fréquence (26, 28).

18. Microscope avec un module de spectroscopie à corrélation de fluorescence selon l'une quelconque des revendications précédentes.

19. Utilisation de module de spectroscopie à corrélation de fluorescence selon l'une quelconque des revendications 1 à 7 ou 18, pour déterminer des coefficients de diffusion.

20. Utilisation selon la revendication 19, pour déterminer des coefficients de diffusion rotatoire.

21. Utilisation du module de spectroscopie à corrélation de fluorescence selon l'une quelconque des revendications 1 à 17 ou 18, avec au moins deux unités optiques pour réaliser la corrélation croisée des signaux de différents spectres d'émission de fluorescence sélectionnés en fréquence desdits au moins deux unités optiques.
